# DEMANDE DE BREVET EUROPEEN

(11) **EP 4 187 426 A1**
(43) Date de publication de la demande: **31.05.2023**
(21) Numéro de dépôt: 22207117.7
(22) Date de dépôt: 14.11.2022
(51) Int. Cl.: G06F 21/74, G06F 21/62, G06F 8/41, G06F 12/14

(54) **PROCÉDÉ D EXÉCUTION D'UN PROGRAMME LOGICIEL PAR UNE UNITÉ DE TRAITEMENT COMPRENANT UNE PHASE DE COMPILATION**

(30) Priorité: 25.11.2021 FR 2112500
(71) Demandeur: STMicroelectronics (Grand Ouest) SAS, 72100 Le Mans (FR)
(72) Inventeur: JAOUEN, Michel, 72530 YVRE L'EVEQUE (FR); PALLARDY, Loic, 72700 ROUILLON (FR); BARRE, Ludovic, 72000 LE MANS (FR)
(74) Mandataire: Casalonga

(57) **Abrégé**

Le procédé d'exécution d'un programme logiciel par une unité de traitement, pouvant avoir des contextes d'exécution de niveaux de droits d'accès sécurisé (CPU_Sec) et non-sécurisé (CPU_NSec), et/ou des contextes d'exécution de niveaux de droits d'accès privilégié (CPU_Priv) et non-privilégié (CPU_NPriv), comprend une phase de compilation (CMPL) générant des instructions en langage machine ayant un niveau de droits d'accès exclusivement sécurisé (inst_sub_sup) si ces instructions sont destinées à être exécutées dans le contexte d'exécution de niveau de droits d'accès sécurisé (CPU_Priv ; CPU_Sec), et des instructions ayant un niveau de droits d'accès non-privilégié (NPriv ; Nsec) si ces instructions sont destinées à être exécutées dans le contexte d'exécution de niveau de droits d'accès non-privilégié (CPU_NPriv ; CPU_NSec).

## Description

Des modes de mise en oeuvre et de réalisation concernent l'exécution d'un programme logiciel par une unité de traitement comprenant une phase de compilation, en particulier dans le cadre où l'exécution du programme peut avoir des contextes d'exécution présentant des niveaux de droits d'accès hiérarchisés.

L'unité de traitement peut typiquement appartenir à un système tel qu'un microcontrôleur ou un microprocesseur.

Des niveaux de droits d'accès hiérarchisés sont par exemple les niveaux de droits d'accès privilégié et non-privilégié, le niveau de droits d'accès privilégié étant hiérarchiquement supérieur au niveau de droit d'accès non-privilégié.

D'autres niveaux de droits d'accès hiérarchisés sont par exemple les niveaux de droits d'accès sécurisé et non-sécurisé, le niveau de droits d'accès sécurisé étant hiérarchiquement supérieur au niveau de droit d'accès non-sécurisé.

Classiquement, les droits d'accès de niveau privilégié et de niveau non-privilégié permettent notamment de donner l'accès et d'empêcher l'accès à des fonctions sensibles du système, par exemple des fonctions de programmation de commandes du système, telles que la configuration du système au démarrage (usuellement « boot » en anglais) ou la programmation des droits d'accès. Certaines ressources matérielles, telles que des registres de piles, peuvent être dupliquée dans les domaines respectivement privilégiés et non-privilégiés.

Les droits d'accès de niveau sécurisé et de niveau non-sécurisé correspondent généralement à une séparation physique d'éléments matériels sécurisés et non-sécurisés, et à une séparation de mémoires ou de zones mémoires respectives. Les éléments sécurisés sont généralement prévus pour mettre en oeuvre des fonctions critiques de sécurité, telles que les chiffrement/déchiffrement accédant à des données sensibles et secrètes.

On notera qu'une exécution dans des éléments matériels de niveau sécurisé ou non-sécurisé, peut avoir en outre une hiérarchie de contextes d'exécution privilégié et non-privilégié.

Lorsqu'un bug ou une injection de faute se produit, le système exécute des opérations incontrôlées, dans le sens où certaines instructions peuvent ne pas être exécutées, certaines instructions nonprévues peuvent être exécutées, et encore certains registres peuvent être utilisés avec des valeurs inattendues.

Selon l'événement ci-dessus se produisant, si le système est placé dans le contexte d'exécution ayant le niveau de droits d'accès hiérarchiquement supérieur, alors le système peut effectuer n'importe quelle opération et éventuellement exécuter une instruction qui ne devrait pas avoir le niveau de droits d'accès supérieur. Il s'agit d'une vulnérabilité du système, pouvant entraîner une fuite de secret, par exemple dans le cadre d'une analyse maîtrisée d'ingénierie inversée.

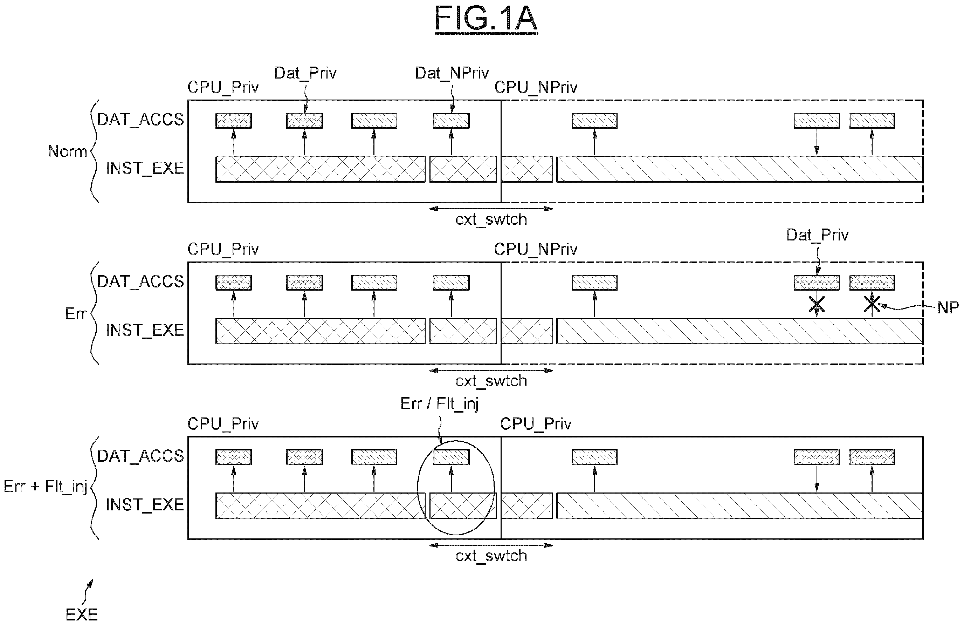

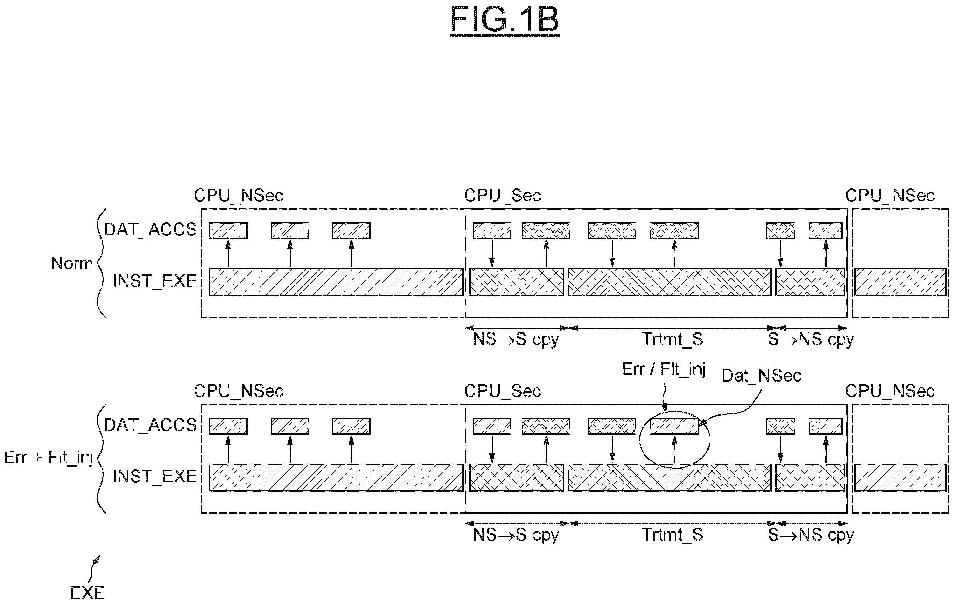

On se réfère aux figures 1A et 1B, illustrant schématiquement un flux d'exécution de tâches d'une unité de traitement ayant des contextes d'exécution hiérarchisés.

La figure 1A illustre un problème classique pouvant se produire entre des contextes d'exécution privilégié CPU_Priv, et non-privilégié CPU_NPriv.

Dans une exécution normale Norm, les instructions exécutées INST_EXE dans le mode privilégié CPU_Priv peuvent accéder à des données DAT_ACCS de niveau privilégié Dat_Priv et non-privilégié Dat_NPriv ; et, les instructions exécutées INST_EXE dans le mode non-privilégié CPU_NPriv sont normalement prévues pour n'accéder qu'à des données DAT_ACCS de niveau non-privilégié Dat_NPriv.

En cas d'erreur Err dans une exécution normale, si des instructions exécutées INST_EXE dans le mode non-privilégié CPU_NPriv commandent un accès à des données DAT_ACCS de niveau privilégié Dat_Priv, alors le contexte d'exécution CPU_NPriv bloque cet accès non-permis NP.

Cela étant, la même erreur Err cumulée avec une autre erreur ou une injection de faute Err/Flt_inj empêchant la transition de contexte cxt_swtch de l'unité de traitement, peut effectivement provoquer un accès illicite à des données privilégiées Dat_Priv par une instruction non-privilégiée.

En effet, étant donné que la seconde erreur ou injection de faute Err/Flt_inj a provoqué que l'unité de traitement est restée dans le contexte privilégié CPU_Priv, les instructions prévues pour être exécutées dans le mode non-privilégié et commandant un accès à des données DAT_ACCS de niveau privilégié Dat_Priv, sont permises par le contexte d'exécution CPU Priv.

La figure 1B illustre un problème similaire pouvant se produire dans les contextes d'exécution sécurisé CPU_Sec et non-sécurisé CPU_NSec.

Etant donné la séparation matérielle entre les contextes d'exécution sécurisé CPU_Sec et non-sécurisé CPU_NSec, la vulnérabilité n'a pas lieu pendant les transitions de contexte NS->S cpy, S->NS cpy, usuellement hautement protégées, mais pendant une phase de traitement sécurisé Trtmt_S. En effet, les traitements sécurisés Trtmt_S comportent typiquement des phases de calculs, par exemple de cryptographie, visant la performance et en conséquence typiquement moins protégés. Ainsi une erreur ou une injection de faute Err/Flt_inj pendant la phase de traitement peut engendrer une écriture de données issues du traitement sécurisé CPU_Sec vers un emplacement mémoire non-sécurisé Dat_NSec (car le contexte d'exécution sécurisé CPU_Sec peut accéder par défaut au mode non-sécurisé, en particulier grâce à une unité de gestion de mémoire « MMU » (pour « Memory Management Unit » en anglais) et une unité d'attribution de sécurité « SAU » (pour « Secure Attribution Unit » en anglais) du processeur.

Il existe un besoin de prémunir les unités de traitement ayant des contextes d'exécutions hiérarchisés contre ce type de vulnérabilités et les dysfonctionnements en résultants.

Selon un aspect, il est proposé à cet égard un procédé comprenant une phase de compilation, au sein d'une unité de traitement, d'un programme logiciel destiné à être exécuté par ladite unité de traitement, ladite unité de traitement pouvant avoir des contextes d'exécution de niveau de droits d'accès sécurisé et non-sécurisé et/ou des contextes d'exécution de niveau de droits d'accès privilégié et non-privilégié, le procédé comprenant une phase de compilation générant des instructions en langage machine ayant un niveau de droits d'accès exclusivement sécurisé si ces instructions sont destinées à être exécutées dans le contexte d'exécution de niveau de droits d'accès sécurisé, et des instructions ayant un niveau de droits d'accès non-privilégié si ces instructions sont destinées à être exécutées dans le contexte d'exécution de niveau de droits d'accès non-privilégié.

En effet, d'une part la hiérarchie entre les niveaux sécurisé et non-sécurisé est typiquement faite de sorte que le niveau sécurisé est capable d'accéder dans le niveau de droit d'accès sécurisé et dans le niveau de droit d'accès non-sécurisé, tandis que le niveau non-sécurisé est capable d'accéder dans le niveau de droit d'accès non-sécurisé uniquement. D'autre part, la hiérarchie entre les niveaux privilégié et non-privilégié est typiquement faite de sorte que le niveau privilégié est capable d'accéder dans le niveau de droit d'accès privilégié et dans le niveau de droit d'accès non-privilégié, tandis que le contexte d'exécution de niveau non-privilégié est capable d'accéder dans le niveau de droit d'accès non-privilégié uniquement.

Or, dans un mode de mise en oeuvre, lors d'une phase d'exécution du programme logiciel compilé, au sein de l'unité de traitement, lesdites instructions ayant le niveau de droits d'accès exclusivement sécurisé sont capable d'accéder à des zones mémoires de niveau de droit d'accès sécurisé et sont incapable d'accéder à des zones mémoires ayant le niveau de droit d'accès non-sécurisé.

En d'autres termes, les instructions en langage machine générées par la phase de compilation selon cet aspect seront intrinsèquement incapables de produire un accès illicite vers des données de niveau de droit d'accès ne correspondant pas au niveau dans lequel elles sont exécutées.

Ainsi, d'une part une instruction exécuté dans le niveau sécurisé ne peut pas engendrer une écriture de données issues du contexte d'exécution sécurisé vers un emplacement mémoire non-sécurisé.

Et d'autre part, une instruction ayant le niveau de droit d'accès non-privilégiée ne peut pas provoquer un accès à des données privilégiées, et même si l'unité de traitement est forcée dans le contexte d'exécution le plus « permissif », c'est-à-dire par exemple dans le cas où une transition de contexte à échouée et l'unité de traitement est restée dans le contexte d'exécution de niveau de droit d'accès privilégié pour exécuter des instructions normalement destinées au contexte d'exécution de niveau non-privilégié.

En pratique, l'instruction ayant le niveau de droit d'accès non-privilégiée pourra faire une tentative d'accès à des données privilégiées, ce qui générera une exception. L'exception pourra être traitée par le processeur qui pourra décider comment gérer cette tentative illicite (et par exemple effectuer une réinitialisation complète, un redémarrage de l'application, ou d'autres mesures).

Selon un mode de mise en oeuvre, la phase de compilation génère les instructions ayant le niveau de droits d'accès exclusivement sécurisé si ces instructions sont destinées à être exécutées dans une phase de traitement particulière du contexte d'exécution de niveau de droits d'accès sécurisé, par exemple une phase de traitement sécurisé typiquement plus vulnérable aux attaques que d'autres phases du contexte d'exécution sécurisé.

Selon un mode de mise en oeuvre, la phase de compilation comprend :
- une génération des instructions en langage machine indistinctement des contextes d'exécution auxquels ces instructions sont destinées à être exécutées, et
- un post-traitement des instructions générées, adapté pour remplacer au moins certaines instructions générées ayant un niveau de droits d'accès ne correspondant pas au niveau de droits d'accès de son contexte d'exécution par des instructions ayant le niveau de droits d'accès correspondant au niveau de droits d'accès de son contexte d'exécution.

Par le verbe « correspondre » dans « niveau de droits d'accès d'une instruction (ne) correspondant (pas) au niveau de droits d'accès de son contexte d'exécution », on entend les conditions de génération des instructions telles que prévues dans la phase de compilation du procédé selon l'aspect définit ci-avant. C'est-à-dire que le niveau de droits d'accès exclusivement sécurisé d'une instruction est le niveau de droit d'accès correspondant au niveau de droits d'accès du contexte d'exécution sécurisé ; et que le niveau de droits d'accès non-privilégié d'une instruction est le niveau de droit d'accès correspondant au niveau de droits d'accès du contexte d'exécution non-privilégié.

Ainsi, le procédé peut s'adapter à des phases de compilation existantes, sans influencer la manière de générer les instructions en langage machine dans la phase de compilation. Le post traitement est en effet un moyen simple et efficace de mettre en oeuvre la phase de compilation selon cet aspect, et de façon compatible et adaptable à tout type d'instruction en langage machine.

Selon un mode de mise en oeuvre, le post-traitement comprend :
- une première identification des instructions ayant le niveau de droit d'accès privilégié, parmi les instructions destinées à être exécutées dans le contexte d'exécution de niveau de droits d'accès non-privilégié,
- une première substitution des instructions identifiées par des instructions fonctionnellement équivalente et ayant le niveau de droits d'accès non-privilégié.

Cela permet en particulier de contrecarrer le cas décrit en relation avec la figure 1A, c'est-à-dire l'accès illicite au niveau de droits d'accès privilégié par des instructions destinées à être exécutées dans le contexte d'exécution de niveau de droit d'accès non-privilégié.

Selon un mode de mise en oeuvre, le post-traitement comprend :
- une deuxième identification des instructions ayant un niveau de droit d'accès sécurisé capable d'accéder à des zones mémoires de droit d'accès sécurisé et à des zones mémoires de niveau de droit d'accès non-sécurisé, parmi les instructions destinées à être exécutées dans le contexte d'exécution de niveau de droits d'accès sécurisé,
- une deuxième substitution des instructions identifiées par des instructions fonctionnellement équivalentes et ayant un niveau de droits d'accès exclusivement sécurisé.

Cela permet en particulier de contrecarrer le cas décrit en relation avec la figure 1B, c'est-à-dire le transfert illicite de données du niveau de droits d'accès sécurisé vers des zones mémoires de niveau de droits d'accès non-sécurisé.

Selon un mode de mise en oeuvre, l'étape de post-traitement comprend une comparaison des instructions générées avec une table de conversion comportant une liste des instructions à substituer et des instructions fonctionnellement équivalentes respectives.

Cela correspond là encore à un moyen simple et efficace de mettre en œuvre le post traitement, et de façon compatible et adaptable à tout type d'instruction en langage machine, et la table de conversion pouvant en outre être mise à jour de façon à couvrir un plus grand nombre d'instructions pouvant causer une vulnérabilité ou adapter le procédé à des nouvelles instructions pouvant causer de nouvelles vulnérabilités.

Selon un mode de mise en oeuvre, la phase de compilation génère des instructions en langage machine à partir d'un code source en langage de programmation, et le post-traitement est mis en oeuvre sur au moins un groupe d'instructions destinées à être exécutées dans le même contexte d'exécution, ledit au moins un groupe d'instructions étant sélectionné dans au moins l'une des formes suivantes :
- des fonctions présentant une déclaration communiquant ladite sélection, dans le code source en langage de programmation ;
- des objets appartenant à un fichier objet intermédiaire, généré à la compilation ;
- des zones d'adresses mémoire contiguës contenant des données binaires codant les instructions de langage machine, générées à la compilation.

En effet, à la compilation, on peut connaître quels sont les contextes d'exécution des différentes instructions, par exemple parmi les objets d'un fichier objet prévoyant typiquement toutes les instructions, typiquement généré comme élément intermédiaire avant les instructions en langage machine proprement dites.

Par ailleurs, la compilation prévoit typiquement une opération de placement en mémoire (usuellement désignée par le terme anglais « link ») permettant d'arranger les données binaires de manière à regrouper dans des zones mémoires contiguës les codes des instructions destinées à être exécuté dans le même contexte d'exécution.

En outre, des déclarations des fonctions du code source peuvent être spécifiquement prévues pour effectuer la sélection des instructions dudit groupe, permettant notamment à un programmeur (c'est-à-dire un auteur du code source) de pouvoir imposer la mise en oeuvre du post-traitement sur une portion de son code, et réciproquement, de pouvoir empêcher la mise en oeuvre du post-traitement sur une portion de son code.

Selon un mode de mise en oeuvre, la phase de compilation génère des instructions en langage machine à partir d'un code source en langage de programmation, et comprend :
- une identification, dans le code source, des contextes d'exécution auxquels sont destinées les instructions correspondant à l'exécution du code source,
- la génération des instructions en langage machine ayant le niveau de droit d'accès correspondant aux contextes d'exécution auxquels ces instructions sont destinées à être exécutés.

Dans cette alternative, la phase de compilation est spécifiquement prévue pour générer directement les instructions en langage machine ayant des droits d'accès correspondant « intrinsèquement » au contexte d'exécution auquel elles sont destinées, de la manière prévue selon l'aspect défini ci-avant. Cela peut être avantageux en matière de performance d'exécution du programme logiciel.

Selon un mode de mise en oeuvre, les instructions destinées à être exécutées dans le contexte d'exécution de niveau de droits d'accès non-privilégié, sont directement générées avec le niveau de droit d'accès non-privilégié.

Selon un mode de mise en oeuvre, les instructions destinées à être exécutées dans le contexte d'exécution de niveau de droits d'accès sécurisé, sont directement générées avec le niveau de droit d'accès exclusivement sécurisé.

Selon un mode de mise en oeuvre, ladite identification dans le code source, comprend une sélection de fonctions présentant une déclaration, dans le code source, communiquant ladite sélection.

Selon un autre aspect il est également proposé un produit programme d'ordinateur comprenant des instructions qui, lorsque le programme est exécuté par un ordinateur, conduisent celui-ci à mettre en oeuvre le procédé tel que définit ci-avant.

Selon un autre aspect, il est également proposé un support lisible par ordinateur comprenant des instructions qui, lorsqu'elles sont exécutées par un ordinateur, conduisent celui-ci à mettre en œuvre le procédé tel que définit ci-avant.

Selon un autre aspect, est également proposé un circuit intégré comportant une unité de traitement adaptée pour mettre en oeuvre la phase de compilation du procédé tel que défini ci-avant, et pour exécuter le programme logiciel compilé, ladite unité de traitement pouvant avoir des contextes d'exécution de niveaux de droits d'accès sécurisé et non-sécurisé, et/ou des contextes d'exécution de niveaux de droits d'accès privilégié et non-privilégié.

Selon un autre aspect, il est proposé un circuit intégré comportant une unité de traitement adaptée pour avoir un contexte d'exécution de niveau de droits d'accès sécurisé et un contexte d'exécution de niveau de droits d'accès non-sécurisé, l'unité de traitement étant capable de traiter des instructions ayant un niveau de droits d'accès exclusivement sécurisé et étant matériellement configuré de sorte qu'une exécution desdites instructions peut accéder à des zones mémoires de niveau de droit d'accès sécurisé, et ne peut pas accéder à des zones mémoires de niveau de droit d'accès non-sécurisé.

Selon un mode de réalisation, l'unité de traitement est configurée pour tester une donnée représentative du niveau de droits d'accès exclusivement sécurisé, dans un code binaire des instructions exécutées, et traiter l'instruction avec la configuration matérielle correspondant au niveau de droits d'accès communiqué par ladite donnée.

D'autres avantages et caractéristiques de l'invention apparaîtront à l'examen de la description détaillée de modes de réalisation et de mise en oeuvre, nullement limitatifs, et des dessins annexés, sur lesquels :
[Fig 1A] ;
[Fig 1B] décrites précédemment, illustrent des cas classiques ;
[Fig 2] ;
[Fig 3] ;
[Fig 4A] ;

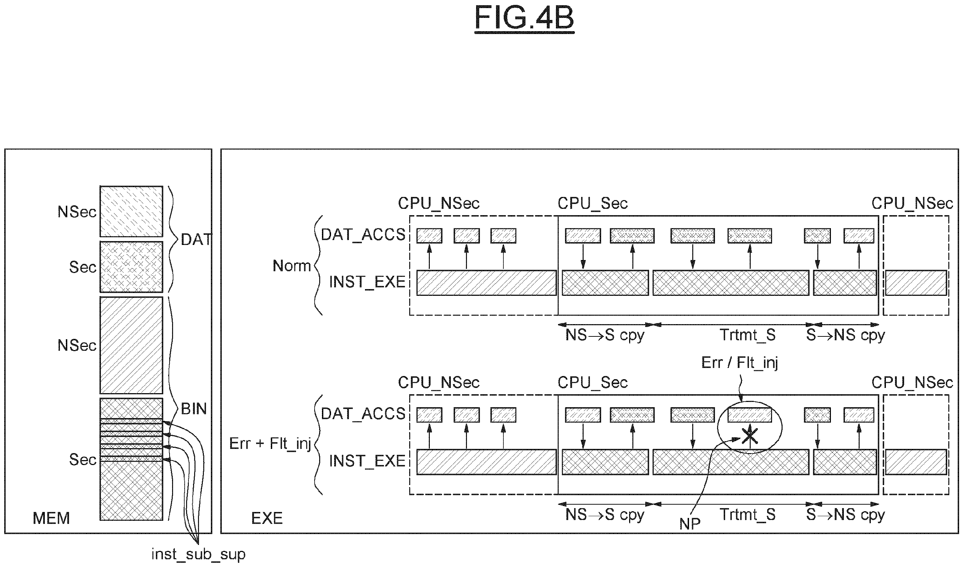

[Fig 4B] illustrent des modes de réalisation et de mise en oeuvre de l'invention.

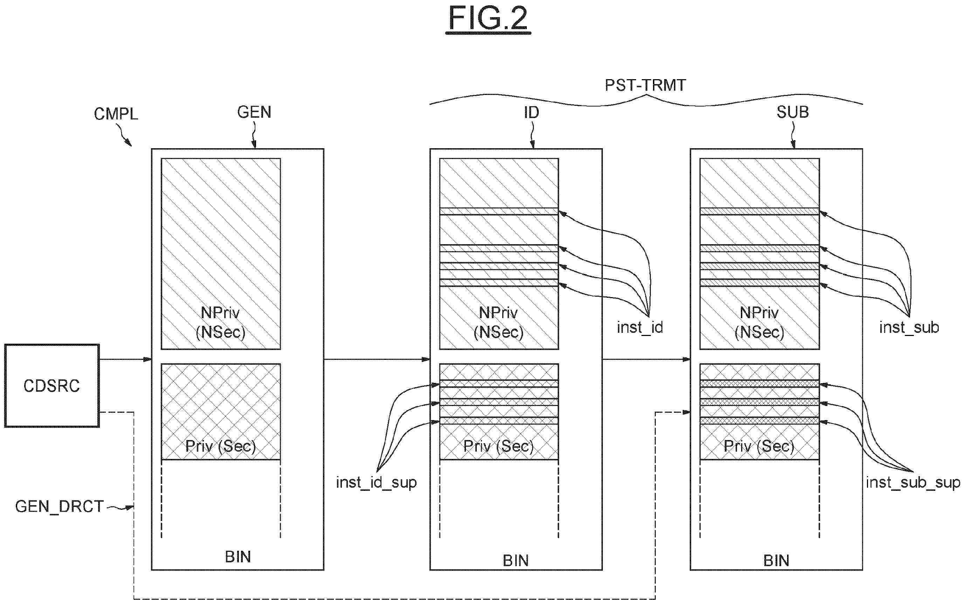

La figure 2 représente un procédé d'exécution d'un programme logiciel, par exemple par une unité de traitement, comprenant en particulier une phase de compilation CMPL générant des instructions en langage machine, usuellement à partir d'un code source en langage de programmation CDSRC. Le programme logiciel compilé est ensuite destiné à être exécuté lors d'une phase d'exécution, par l'unité de traitement.

Le procédé peut être matérialisé en pratique par un programme d'ordinateur comprenant des instructions qui, lorsque le programme est exécuté par un ordinateur, conduisent celui-ci à mettre en oeuvre le procédé. Le procédé peut aussi être matérialisé en pratique par un support lisible par ordinateur comprenant des instructions qui, lorsqu'elles sont exécutées par un ordinateur, conduisent celui-ci à mettre en oeuvre le procédé.

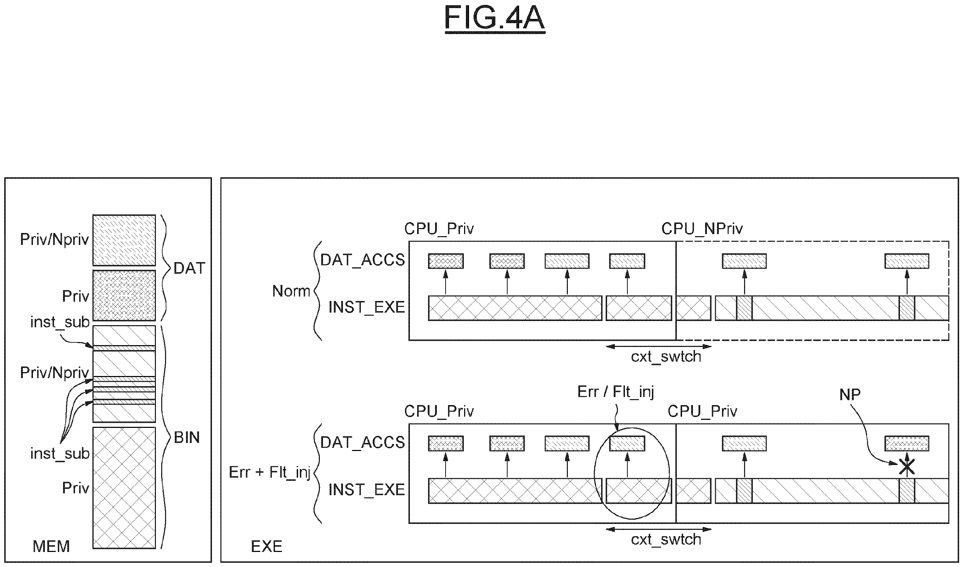

L'unité de traitement, appartenant par exemple à un système de microcontrôleur ou de microprocesseur, usuellement réalisé sous la forme d'un circuit intégré, peut avoir un contexte d'exécution de niveau de droits d'accès supérieur pouvant être le niveau de droit d'accès sécurisé CPU_Sec, et/ou pouvant être le niveau de droit d'accès privilégié CPU_Priv, et un contexte d'exécution de niveau de droits d'accès inférieur pouvant être le niveau de droit d'accès non-sécurisé CPU_NSec, et/ou pouvant être le niveau de droit d'accès non-privilégié CPU_NPriv (figures 4A-4B).

Les termes droits d'accès de niveau sécurisé Sec et de niveau non-sécurisé NSec ainsi que les termes droits d'accès de niveau privilégié Priv et de niveau non-privilégié NPriv ont la signification usuelle et classique bien connue de l'homme de l'art.

On notera en particulier que les contextes d'exécution de niveaux privilégié et non-privilégié peuvent être utilisés de façon autonome, ou en tant que « sous-contexte » des contextes d'exécution de niveaux sécurisé et non-sécurisé.

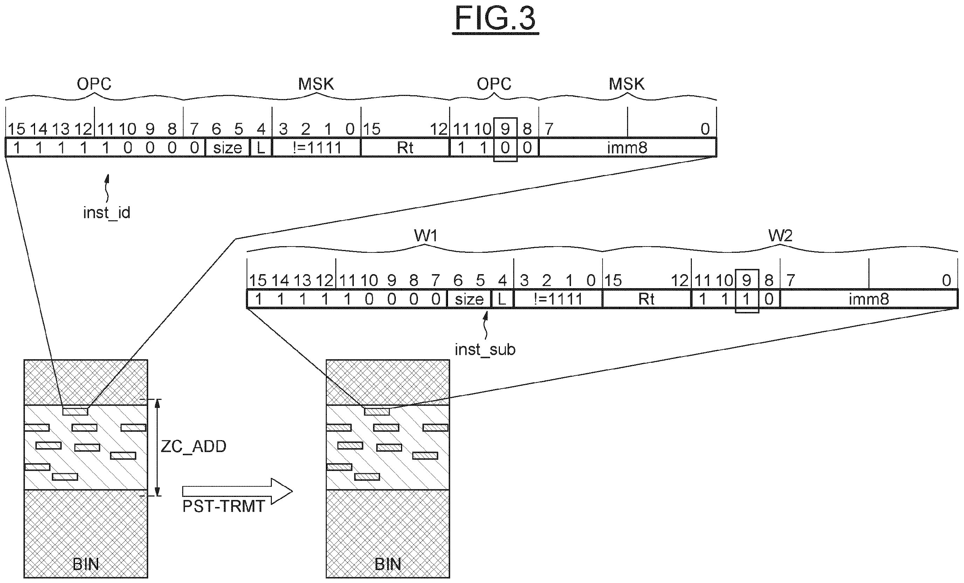

Dans les compilations classiques, les instructions en langage machine ne sont typiquement pas générées selon le niveau de droit d'accès dans lequel elles sont destinées à être exécutées. En outre, la grande majorité des instructions en langage machine n'existent qu'avec le niveau de droit d'accès hiérarchiquement supérieur inst_id (figure 3).

Or, la phase de compilation CMPL de ce procédé est prévue pour générer des instructions en langage machine ayant un niveau de droits d'accès exclusivement sécurisé si ces instructions sont destinées à être exécutées dans le contexte d'exécution de niveau de droits d'accès sécurisé CPU_Sec, et pour générer des instructions ayant un niveau de droits d'accès non-privilégié NPriv si ces instructions sont destinées à être exécutées dans le contexte d'exécution de niveau de droits d'accès non-privilégié CPU_NPriv.

Dans l'exemple de compilation CMPL illustré par la figure 2 les niveaux de droit d'accès inférieurs correspondent au niveau « non-privilégié » NPriv, tandis que les niveaux de droits d'accès supérieurs correspondent au niveau « sécurisé » Sec, d'une manière arbitraire et pour des raisons de concision de la description.

Dans une première alternative, la phase de compilation CMPL comprend d'abord une génération GEN des instructions en langage machine BIN suivie d'un post-traitement PST-TRMT des instructions générées.

La génération GEN des instructions en langage machine BIN est faite indistinctement des contextes d'exécution Priv, NPriv auxquels les instructions générées sont destinées à être exécutées, et toutes les instructions générées ont le niveau de droits d'accès hiérarchiquement supérieur. La génération GEN de la phase de compilation CMPL correspond sommairement à ce qui est fait par une compilation classique.

Le post-traitement PST-TRMT des instructions générées est adapté pour remplacer au moins certaines des instructions générées inst_id, inst_id_sup ayant un niveau de droits d'accès ne correspondant pas au niveau de droits d'accès de son contexte d'exécution Priv, NPriv, par des instructions de substitution inst_sub, inst_sub_sup ayant un niveau de droits d'accès correspondant au niveau de droits d'accès de son contexte d'exécution Priv, NPriv.

Par « correspondre », on entend ici « correspondre aux conditions de génération des instructions dans la phase de compilation CMPL du procédé décrit ci-avant ». C'est-à-dire que le niveau de droits d'accès exclusivement sécurisé d'une instruction correspond au contexte d'exécution sécurisé ; et que le niveau de droits d'accès non-privilégié d'une instruction correspond au contexte d'exécution non-privilégié.

A cet égard, le post-traitement PST-TRMT comporte d'une part une étape d'identification ID, suivie d'une étape de substitution SUB.

L'étape d'identification ID est configurée pour identifier des instructions inst_id parmi les instructions destinées à être exécutées dans le contexte d'exécution de niveau de droits d'accès inférieur NPriv. Les instructions identifiées inst_id_sup sont les instructions qui ont le niveau de droit d'accès supérieur Priv.

L'étape de substitution SUB est quant à elle configurée pour remplacer les instructions identifiées inst_id par des instructions fonctionnellement équivalentes et ayant le niveau de droits d'accès inférieur inst_sub.

Le post-traitement PST-TRMT appliqué sur les instructions destinées à être exécutées dans le contexte d'exécution de niveau de droits d'accès inférieur CPU_NPriv est particulièrement mais non-exclusivement adapté pour les droits d'accès « privilégié » Priv et « non-privilégié » NPriv. En effet, cette application permet notamment de pallier la vulnérabilité pouvant se produire en cas de blocage de la transition du contexte d'exécution vers le niveau de droits d'accès inférieur « non-privilégié » NPriv, telle que décrit ci-après en relation avec la figure 4A.

En outre, l'étape d'identification ID peut être configurée pour identifier des instructions inst_id_sup parmi les instructions destinées à être exécutées dans le contexte d'exécution de niveau de droits d'accès supérieur Sec. Les instructions identifiées inst_id_sup sont les instructions qui ont un niveau de droit d'accès supérieur, pouvant être appelé « non-exclusivement » supérieur, c'est-à-dire capable d'accéder à des zones mémoires ayant le niveau de droit d'accès supérieur Sec et à des zones mémoires ayant le niveau de droit d'accès inférieur NSec.

Et, dans ce cas, l'étape de substitution SUB peut être configurée pour remplacer lesdites instructions identifiées inst_id_sup ayant le niveau de droit d'accès non-exclusivement supérieur, par des instructions fonctionnellement équivalentes et ayant un niveau de droits d'accès dit « exclusivement » supérieur inst_sub_sup, c'est-à-dire capable d'accéder à des zones mémoires ayant le niveau de droit d'accès supérieur et incapable d'accéder à des zones mémoires ayant le niveau de droit d'accès inférieur.

Le post-traitement PST-TRMT appliqué sur les instructions destinées à être exécutées dans le contexte d'exécution de niveau de droits d'accès supérieur CPU_Sec est particulièrement mais non-exclusivement adapté pour les droits d'accès « sécurisé » Sec et « non-sécurisé » NSec. En effet, cette application permet notamment de pallier la vulnérabilité pouvant se produire pendant une phase de traitement de données Trmt_S dans le contexte d'exécution de niveau de droits d'accès supérieur « sécurisé » Sec, typiquement moins surveillée et protégée que les phases de transitions de contextes, telle que décrit ci-après en relation avec la figue 4B.

Par exemple, l'étape de post-traitement PST-TRMT peut être mise en oeuvre au moyen d'une table de conversion contenant une liste des instructions à remplacer inst_id, inst_id_sup, et pour chaque instruction à remplacer inst_id, inst_id_sup, l'instruction de substitution correspondante inst_sub, inst_sub _sup, c'est-à-dire par exemple la même instruction mais ayant des droits d'accès différents (i.e. resp. le niveau de droits d'accès inférieur inst_sub, et le niveau de droit d'accès exclusivement supérieur inst_sub_sup).

Par ailleurs, les instructions sur lesquelles appliquer le post-traitement PST-TRMT sont sélectionnées, en particulier selon le contexte d'exécution CPU_Priv, CPU_NPriv, CPU_Sec, CPU_NSec auxquelles elles sont destinées à être exécutées. En particulier également, les instructions sur lesquelles appliquer le post-traitement PST-TRMT peuvent être sélectionnées selon le type de traitement réalisé par le programme, par exemple un type de traitement tel que le traitement Trtmt_S qui est exécuté dans le contexte d'exécution sécurisé CPU_Sec et qui n'a pas besoin d'accéder aux zones mémoires de niveau non-sécurisé NSec.

Ainsi, les instructions peuvent être sélectionnées en ce qu'elles sont destinées à être exécutées dans le même contexte d'exécution NPriv, Priv.

En effet, les contextes d'exécutions CPU_Priv, CPU_NPriv, CPU_Sec, CPU_NSec, sont définis par la phase de compilation CMPL (GEN), de sorte que la compilation « sait » quels sont les contextes d'exécution des différentes instructions. Plus particulièrement, la compilation peut identifier différentes phases de traitement particulières d'un contexte donné. Par exemple la compilation peut identifier notamment des phases de traitement sécurisé Trtmt_S et des phases de transitions de contexte NS->S cpy, S->NS cpy dans les contextes d'exécution sécurisé CPU_Sec et non-sécurisé CPU_NSec (voir ci-après en relation avec la figure 4B).

Ainsi, la sélection des groupes d'instructions peut être faite aisément en fonction du contexte d'exécution desdites instructions, et même en fonction d'une phase de traitement effectué dans le contexte correspondant.

Aussi, les étapes d'identification ID et de substitution SUB peuvent être faites sur différentes formes des instructions, correspondant à différents instants de la phase de compilation CMPL.

Par exemple, les instructions peuvent être sélectionnées dans le code source CDSRC, au moyen de déclarations des fonctions du code source CDSRC spécifiquement conçues à cet égard. Les déclarations permettent de communiquer, de manière choisie par le programmeur, la sélection des instructions relatives aux fonctions ainsi déclarées pour le post-traitement PST-TRMT.

Par exemple, les instructions peuvent être sélectionnées dans un fichier objet généré dans la phase de compilation CMPL. La phase de compilation CMPL peut en effet typiquement comprendre une génération d'un fichier intermédiaire appelé fichier objet (dont le suffixe est souvent noté « .o ») contenant des objets du code, notamment les instructions. Dans les fichiers objet, les contextes d'exécution et les phases de traitement des objets sont connus, et ainsi la sélection des groupes d'instructions peut être faite aisément en fonction du contexte d'exécution et/ou des phases de traitement des objets correspondant.

Par exemple, les instructions peuvent être sélectionnées dans des données binaires BIN codant les instructions de langage machine, générées à la compilation. La phase de compilation CMPL peut en effet typiquement stocker données binaires BIN codant les instructions destinées à être exécutées dans le même contexte d'exécution Priv, NPriv, dans des zones d'adresses mémoire contiguës ZC_ADD (figure 3). Ceci peut également être le cas pour les données binaires BIN codant les instructions destinées à être exécutées dans une phase de traitement particulière Trtmt_S, d'un contexte donné.

On se réfère à cet égard à la figure 3.

La figure 3 illustre un cas pratique d'identification ID et de substitution SUB d'une instruction inst_id par une instruction de substitution inst_sub à partir d'une sélectionnée définie par une zone d'adresses mémoire contiguës ZC_ADD contenant les données binaires BIN générée GEN dans la phase de compilation CMPL.

Dans cet exemple, chaque instruction en langage machine inst_id, inst_sub est codée sur deux mots W1, W2 de 16 bits 0-15, comportant un code opérationnel OPC sur les bits 7-15 du premier mot W1, et sur les bits 8-11 du deuxième mot W2, ainsi que des données appelées « masque » MSK sur les bits 0-6 du premier mot W1 et sur les bits 0-7 et 12-15 du deuxième mot W2.

Sommairement, le code opérationnel OPC permet de définir la nature de l'instruction, tandis que le masque MSK correspond à des paramètres de l'instruction.

En particulier, et selon un exemple arbitraire, le bit 9 du deuxième mot W2 permet de définir un niveau de permission alloué à l'instruction. Le niveau de permission élevé, par exemple codé lorsque le bit 9 est à 0, correspond au niveau de droit d'accès hiérarchiquement supérieur. Le niveau de permission bas, par exemple codé lorsque le bit 9 est à 1, correspond au niveau de droit d'accès hiérarchiquement inférieur.

Ainsi, dans cet exemple l'instruction de substitution inst_sub est identique à l'instruction identifiée pour être remplacée inst_id, excepté le bit 9 égal à 1 dans l'instruction de substitution inst_sub. Cela correspond au cas du remplacement d'une instruction inst_id ayant le niveau de droit d'accès supérieur (bit 9 du deuxième mot = 0), parmi les instructions destinées à être exécutées dans le contexte d'exécution de niveau de droits d'accès inférieur NPriv, par une instruction fonctionnellement équivalente inst_sub et ayant le niveau de droits d'accès inférieur (bit 9 du deuxième mot = 1).

On pourra par ailleurs prévoir un codage sur les bits du code opérationnel OP définissant un niveau de permission correspondant à un niveau de droit d'accès exclusivement sécurisé, c'est-à-dire capable d'accéder aux zones mémoires de niveau de droits d'accès sécurisé Sec mais pas aux zones mémoires de niveau de droit d'accès non-sécurisé NSec.

A cet égard, l'unité de traitement est capable de traiter des instructions ayant un niveau de droits d'accès exclusivement sécurisé inst_sub_sup en étant matériellement configurée de sorte qu'une exécution desdites instructions inst_sub_sup peut accéder à des zones mémoires de niveau de droit d'accès sécurisé CPU_Sec, et ne peut pas accéder à des zones mémoires de niveau de droit d'accès non-sécurisé CPU_NSec.

Ainsi, l'unité de traitement peut être configurée pour tester ledit codage, c'est-à-dire la donnée représentative du niveau de droits d'accès exclusivement supérieur, dans un code binaire OPC des instructions exécutées, et traiter l'instruction inst_sub_sup avec la configuration matérielle correspondant au niveau de droits d'accès communiqué par ledit codage.

On se réfère de nouveau à la figure 2.

Dans une seconde alternative GEN_DRCT, la phase de compilation CMPL comprend une identification, dans le code source CDSRC, des contextes d'exécution NPriv, Sec et des portions correspondant aux phases de traitements (Trtmt_S), auxquels sont destinées les instructions correspondant à l'exécution du code source CDSRC. Et, la phase de compilation CMPL comprend une génération GEN_DRCT des instructions en langage machine ayant directement le niveau de droit d'accès correspondant aux contextes d'exécution auxquels ces instructions sont destinées à être exécutés.

En particulier, cette seconde alternative prévoit avantageusement l'identification dans le code source CDSRC d'une sélection de fonctions présentant une déclaration, permettant (par exemple à un programmeur) de communiquer que les instructions relatives à la compilation desdites fonctions déclarées, doivent être directement générée GEN_DRCT avec le niveau de permission (par exemple communiqué par le bit 9) correspondant au contexte d'exécution auquel lesdites instructions sont destinées à être exécutées.

La figure 4A illustre schématiquement un flux d'exécution d'un programme logiciel par une unité de traitement ayant des contextes d'exécution hiérarchisés (privilégié Priv et non-privilégié NPriv), de la même manière que décrit précédemment en relation avec la figure 1A, mais dans le cas où l'exécution de programme logiciel est mise en œuvre par le procédé décrit ci-avant en relation avec les figures 2 et 3.

Les éléments communs avec les figures précédentes 1A, 2 et 3, supportent les mêmes références et ne seront pas tous détaillés à nouveau.

Le mappage de la mémoire MEM, correspondant à la configuration des niveaux de droits d'accès par exemple définis par une unité de gestion de mémoire « MMU » ou « MPU » (acronymes des termes anglais usuels « Memory Management Unit » et, respectivement, « Memory Protection Unit ») associées ou non à un pare-feu de mémoire, est en outre représenté.

La mémoire MEM comporte ainsi une zone mémoire BIN contenant les données binaires, générées à la compilation, codant les instructions de langage machine, pour le contexte d'exécution privilégié Priv et pour le contexte d'exécution non-privilégié NPriv. En outre, la mémoire MEM contient des zones mémoires DAT contenant des données relatives à la mise en oeuvre et aux résultats obtenus par les exécutions dans le contexte privilégié Priv et dans le contexte non-privilégié NPriv.

On notera que dans un état « naturel » du mappage de la mémoire MEM, les zones mémoires de niveau de droits d'accès inférieur NPriv sont accessibles à la fois par le niveau de droits d'accès inférieur et le niveau de droits d'accès supérieur « Priv/NPriv ».

Ainsi, et en particulier, la phase de compilation CMPL a généré au moins certaines des instructions en langage machine inst_sub destinées à être exécutées dans le contexte d'exécution de niveau de droits d'accès inférieur NPriv, avec un niveau de droits d'accès inférieur inst_sub.

Cela n'a pas d'incidence particulière sur les exécutions normales Norm.

Par contre, dans le cas d'une erreur, et/ou éventuellement une injection de faute, Err+ Flt_inj empêchant la transition de contexte cxt_swtch de l'unité de traitement, de sorte que l'unité de traitement est restée dans le contexte privilégié CPU_Priv, alors les instructions prévues pour être exécutées dans le mode non-privilégié NPriv et commandant un accès à des données DAT_ACCS de niveau privilégié Dat_Priv, ne sont pas interdites par le contexte d'exécution CPU_PRIV.

Or, les instruction inst_sub exécutées dans le mode non-privilégié NPriv, sont par construction incapable d'accéder à des données DAT_ACCS de niveau privilégié Dat_Priv.

En effet, les instructions en langage machine générées par la phase de compilation CMPL du procédé sont intrinsèquement incapables de produire un accès illicite vers des données de niveau de droit d'accès supérieur, et même si l'unité de traitement est forcée dans le contexte d'exécution ayant le niveau de droits d'accès le plus permissif, c'est - à-dire le niveau supérieur.

La figure 4B illustre schématiquement un flux d'exécution d'un programme logiciel par une unité de traitement ayant des contextes d'exécution hiérarchisés (sécurisé Sec et non-sécurisé NSec), ainsi que des phases de traitements Trtmt_S, NS->S cpy, S->NS cpy relatives auxdits contextes, de la même manière que décrit précédemment en relation avec la figure 1B, mais dans le cas où l'exécution de programme logiciel est mise en oeuvre par le procédé décrit ci-avant en relation avec les figures 2 et 3.

Les éléments communs avec les figures précédentes 1B, 2 et 3, supportent les mêmes références et ne seront pas tous détaillées à nouveau.

Le mappage de la mémoire MEM, correspondant à la configuration des niveaux de droits d'accès par exemple définis par un pare-feu de mémoire et une unité de gestion de mémoire « MMU » ou « SAU » (acronymes des termes anglais usuels « Memory Management Unit » et, respectivement, « Security Attribution Unit »), est en outre représenté.

La mémoire MEM comporte ainsi une zone mémoire BIN contenant les données binaires, générées à la compilation, codant les instructions de langage machine, pour le contexte d'exécution sécurisé Sec et pour le contexte d'exécution non-sécurisé NSec. En outre, la mémoire MEM contient des zones mémoires DAT contenant des données relatives à la mise en oeuvre et aux résultats obtenus par les exécutions dans le contexte sécurisé Sec et dans le contexte non-sécurisé NSec. Les zones mémoire contenant les codes d'instructions destinées à être exécutées dans une phase de traitement donnée Trtmt_S, peuvent également être identifiées dans la mémoire MEM.

On notera que dans un état « naturel » du mappage de la mémoire MEM, les zones mémoires contenant les données DAT de niveau de droits d'accès inférieur NSec sont accessibles à la fois par le niveau de droits d'accès inférieur et le niveau de droits d'accès supérieur « Sec/NSec ».

Ainsi, et en particulier, la phase de compilation CMPL a généré au moins certaines des instructions en langage machine inst_sub_sup destinées à être exécutées dans le contexte d'exécution de niveau de droits d'accès supérieur Sec, avec un niveau de droits d'accès exclusivement supérieur inst_sub_sup. Lesdites au moins certaines instructions inst_sub_sup sont par exemple les instructions destinées à être exécutées dans la phase de traitement particulière Trtmt_S.

Cela n'a pas d'incidence particulière sur les exécutions normales Norm.

Par contre, dans le cas d'une erreur, et/ou éventuellement une injection de faute, Err+ Flt_inj pendant la phase de traitement sécurisé Trtmt_S engendrant une tentative d'écriture de données issues du traitement sécurisé CPU_Sec vers un emplacement mémoire non sécurisé Dat_NSec, l'écriture est impossible à mettre en oeuvre.

En effet, les instructions inst_sub_sup sont par construction incapable d'accéder à des données DAT_ACCS de niveau non-sécurisé Dat_NSec.

Ainsi, les instructions en langage machine générées par la phase de compilation CMPL du procédé sont intrinsèquement incapables de produire un accès illicite vers des données de niveau de droit d'accès inférieur, pendant une phase de traitement particulière Trtmt_S du contexte d'exécution de niveau de droit d'accès supérieur Sec, par exemple pendant une phase de traitement sécurisée Trtmt_S dans laquelle les mécanismes de vérification du respect des droits d'accès sont typiquement moindres, que par exemple dans les phases de transitions de contexte NS->S cpy, S->NS cpy.

## Revendications

1. Procédé comprenant une phase de compilation, au sein d'une unité de traitement, d'un programme logiciel destiné à être exécuté par ladite unité de traitement, ladite unité de traitement pouvant avoir des contextes d'exécution de niveaux de droits d'accès sécurisé (CPU_Sec) et non-sécurisé (CPU_NSec), et/ou des contextes d'exécution de niveaux de droits d'accès privilégié (CPU_Priv) et non-privilégié (CPU_NPriv), la phase de compilation (CMPL) générant des instructions en langage machine ayant un niveau de droits d'accès exclusivement sécurisé (inst_sub_sup) si ces instructions sont destinées à être exécutées dans le contexte d'exécution de niveau de droits d'accès sécurisé (CPU_Sec), et des instructions ayant un niveau de droits d'accès non-privilégié (NPriv) si ces instructions sont destinées à être exécutées dans le contexte d'exécution de niveau de droits d'accès non-privilégié (CPU_NPriv).

2. Procédé selon la revendication 1, comprenant en outre une phase d'exécution du programme logiciel compilé, au sein de l'unité de traitement, dans lequel lors de la phase d'exécution, lesdites instructions ayant le niveau de droits d'accès exclusivement sécurisé (inst_sub_sup) sont capable d'accéder à des zones mémoires de niveau de droit d'accès sécurisé (Sec) et sont incapable d'accéder à des zones mémoires ayant le niveau de droit d'accès non-sécurisé (NSec).

3. Procédé selon l'une des revendications 1 ou 2, dans lequel la phase de compilation (CMPL) génère les instructions ayant le niveau de droits d'accès exclusivement sécurisé (inst_sub_sup) si ces instructions sont destinées à être exécutées dans une phase de traitement particulière du contexte d'exécution de niveau de droits d'accès sécurisé (CPU_Sec).

4. Procédé selon l'une des revendications précédentes, dans lequel la phase de compilation (CMPL) comprend :
- une génération (GEN) des instructions en langage machine (BIN) indistinctement des contextes d'exécution (Priv, NPriv) auxquels ces instructions sont destinées à être exécutées, et
- un post-traitement (PST-TRMT) des instructions générées, adapté pour remplacer au moins certaines instructions générées (inst_id) ayant un niveau de droits d'accès ne correspondant pas au niveau de droits d'accès de son contexte d'exécution (Sec, NPriv) par des instructions (inst_sub, inst_sub_sup) ayant le niveau de droits d'accès correspondant au niveau de droits d'accès de son contexte d'exécution (Sec, NPriv).

5. Procédé selon la revendication 4, dans lequel le post-traitement (PST-TRMT) comprend :
- - une première identification (ID) des instructions ayant le niveau de droit d'accès privilégié (inst_id), parmi les instructions destinées à être exécutées dans le contexte d'exécution de niveau de droits d'accès non-privilégié (NPriv),
- - une première substitution (SUB) des instructions identifiées (inst_id) par des instructions fonctionnellement équivalentes et ayant le niveau de droits d'accès non-privilégié (inst_sub).

6. Procédé selon l'une des revendications 4 ou 5, dans lequel le post-traitement (PST-TRMT) comprend :
- - une deuxième identification (ID) des instructions ayant un niveau de droit d'accès sécurisé (Sec) capable d'accéder à des zones mémoires ayant le niveau de droit d'accès sécurisé et des zones mémoires ayant le niveau de droit d'accès non-sécurisé (inst_id_sup), parmi les instructions destinées à être exécutées dans le contexte d'exécution de niveau de droits d'accès sécurisé (Sec),
- - une deuxième substitution (SUB) des instructions identifiées (inst_id_sup) par des instructions fonctionnellement équivalentes et ayant un niveau de droits d'accès exclusivement sécurisé (inst_sub_sup).

7. Procédé selon l'une des revendications 4 à 6, dans lequel l'étape de post-traitement (PST-TRMT) comprend une comparaison des instructions générées avec une table de conversion comportant une liste des instructions à substituer (inst_id, inst_id_sup) et des instructions fonctionnellement équivalentes respectives (inst_sub, inst_sub_sup).

8. Procédé selon l'une des revendications 4 à 7, la phase de compilation générant des instructions en langage machine à partir d'un code source en langage de programmation (CDSRC), dans lequel le post-traitement est mis en oeuvre sur au moins un groupe d'instructions destinées à être exécutées dans le même contexte d'exécution, ledit au moins un groupe d'instructions étant sélectionné dans au moins l'une des formes suivantes :
- des fonctions présentant une déclaration communiquant ladite sélection, dans le code source en langage de programmation (CDSRC) ;
- des objets appartenant à un fichier objet intermédiaire, généré à la compilation ;
- des zones d'adresses mémoire contiguës (ZC_ADD) contenant des données binaires (BIN) codant les instructions de langage machine, générées à la compilation.

9. Procédé selon l'une des revendications 1 à 3, dans lequel la phase de compilation génère des instructions en langage machine à partir d'un code source en langage de programmation (CDSRC), et comprend :
- une identification, dans le code source (CDSRC), des contextes d'exécution (Sec, NPriv) auxquels sont destinées les instructions correspondant à l'exécution du code source,
- la génération (GEN_DRCT) des instructions en langage machine ayant le niveau de droit d'accès correspondant aux contextes d'exécution auxquels ces instructions sont destinées à être exécutés.

10. Procédé selon la revendication 9, dans lequel les instructions destinées à être exécutées dans le contexte d'exécution de niveau de droits d'accès non-privilégié (NPriv), sont directement générées avec le niveau de droit d'accès non-privilégié (inst_sub).

11. Procédé selon l'une des revendications 9 ou 10, dans lequel les instructions destinées à être exécutées dans le contexte d'exécution de niveau de droits d'accès sécurisé (Sec), sont directement générées avec le niveau de droit d'accès exclusivement sécurisé (inst_sub_sup).

12. Procédé selon l'une des revendications 9 à 11, dans lequel ladite identification dans le code source (CDSRC), comprend une sélection de fonctions présentant une déclaration, dans le code source (CDSRC), communiquant ladite sélection.

13. Produit programme d'ordinateur comprenant des instructions qui, lorsque le programme est exécuté par un ordinateur, conduisent celui-ci à mettre en oeuvre le procédé selon l'une des revendications 1 à 12.

14. Support lisible par ordinateur comprenant des instructions qui, lorsqu'elles sont exécutées par un ordinateur, conduisent celui-ci à mettre en oeuvre le procédé selon l'une des revendications 1 à 12.

15. Circuit intégré comportant une unité de traitement adaptée pour mettre en oeuvre la phase de compilation (CMPL) du procédé selon l'une des revendications 1 à 12, et pour exécuter le programme logiciel compilé, ladite unité de traitement pouvant avoir des contextes d'exécution de niveaux de droits d'accès sécurisé (CPU_Sec) et non-sécurisé (CPU_NSec), et/ou des contextes d'exécution de niveaux de droits d'accès privilégié (CPU_Priv) et non-privilégié (CPU_NPriv).

16. Circuit intégré comportant une unité de traitement adaptée pour avoir un contexte d'exécution de niveau de droits d'accès sécurisé (CPU_Sec) et un contexte d'exécution de niveau de droits d'accès non-sécurisé (CPU_NSec), l'unité de traitement étant capable de traiter des instructions ayant un niveau de droits d'accès exclusivement sécurisé (inst_sub_sup) et étant matériellement configuré de sorte qu'une exécution desdites instructions (inst_sub_sup) peut accéder à des zones mémoires de niveau de droit d'accès sécurisé (CPU_Sec), et ne peut pas accéder à des zones mémoires de niveau de droit d'accès non-sécurisé (CPU_NSec).

17. Circuit intégré selon la revendication 16, dans lequel l'unité de traitement est configurée pour tester une donnée (9, W2) représentative du niveau de droits d'accès exclusivement sécurisé, dans un code binaire (OPC) des instructions exécutées, et traiter l'instruction (inst_sub_sup) avec la configuration matérielle correspondant au niveau de droits d'accès communiqué par ladite donnée.
